# EUROPEAN PATENT APPLICATION

(11) **EP 4 035 777 A1**
(43) Date of publication of application: **03.08.2022**
(21) Application number: 20867584.3
(22) Date of filing: 25.09.2020
(51) Int. Cl.: B02B 3/04, B02B 7/00, G01N 21/85

(54) **HULLING APPARATUS AND HULLING CONTROL SYSTEM**

(30) Priority: 27.09.2019 JP 2019176740; 06.04.2020 JP 2020068525
(71) Applicant: Satake Corporation, Chiyoda-ku Tokyo 101-0021 (JP)
(72) Inventor: KOREDA Minoru, Tokyo 101-0021 (JP)
(74) Representative: Haseltine Lake Kempner LLP
(86) International application number: PCT/JP2020/036265
(87) International publication number: WO 2021/060465

(57) **Abstract**

A hulling machine configured to perform hulling through a husking roll, a hulled-rice discrimination machine capable of examining hulled rice discharged from the hulling machine, and a hulling control unit capable of controlling the hulling machine in accordance with a result of the examination of the hulled rice at the hulled-rice discrimination machine are provided, and the hulling control unit includes a rotational speed change means configured to change a rotational speed of the husking roll in the hulling machine in accordance with the result of the examination of the hulled rice.

## Description

### [Technical Field]

The present invention relates to a hulling device and a hulling control system that are capable of controlling a hulling machine in accordance with a quality state of hulled rice.

### [Background Art]

In a conventional hulling machine configured to perform hulling by exploiting the circumferential speed difference between a primary roll and a secondary roll, imbalance occurs to abrasion of the primary roll and the secondary roll, and thus rubber rolls of the primary roll and the secondary roll have been typically replaced by hand. This work is cumbersome, and various kinds of methods for saving manual replacement of rubber rolls have been disclosed.

For example, in methods disclosed in Patent Literatures 1 to 3, a variable speed motor is directly connected to each of a primary shaft and a secondary shaft, and the speed of each variable speed motor is changed in every elapse of a certain time to switch the primary shaft and the secondary shaft.

In methods disclosed in Patent Literatures 4 and 5, large and small pulleys are installed on each of the rotational shafts of a primary roll and a secondary roll in a manner that the large pulley on one of the shafts corresponds to the small pulley on the other shaft, and a clutch is engaged between the large and small pulleys of each rotational shaft, the clutch being slidable in a front-back direction of the rotational shaft, and this configuration enables single-touch switching between high speed and low speed.

In a method disclosed in Patent Literature 6, the rotational frequencies of the primary and secondary rolls are switched by using a belt clutch mechanism and an idler pulley instead of a structure in which a clutch slides forward and backward in the direction of a rotational shaft.

### [Citation List]

### [Patent Literature]

[Patent Literature 1] Japanese Utility Model Publication No. 62-29064
[Patent Literature 2] Japanese Patent Laid-open No. 3-137945
[Patent Literature 3] Japanese Patent Laid-open No. 2001-38230
[Patent Literature 4] Japanese Patent Laid-open No. 3-106452
[Patent Literature 5] Japanese Patent Laid-open No. 2006-312151
[Patent Literature 6] Japanese Patent Laid-open No. 2009-72765

### [Summary of Invention]

### [Technical Problem]

However, in a conventional hulling machine disclosed in the above-described Patent Literatures 1 to 6, the rotational frequencies of the rolls of the primary shaft and the secondary shaft are switched as a certain time elapses irrespective of the quality status of hulled rice, and thus the quality of hulled rice, including the husking ratio, could not be maintained in a most favorable state in some cases.

The present invention is intended to solve the above-described problem and provide a hulling device and a hulling control system that are capable of performing appropriate control of a hulling machine in accordance with a quality state of hulled rice.

### [Solution to Problem]

An invention according to Claim 1 of the present application is a hulling device including: a hulling machine configured to perform hulling through a husking roll; a hulled-rice discrimination machine capable of examining hulled rice discharged from the hulling machine; and a hulling control unit capable of controlling the hulling machine in accordance with a result of the examination of the hulled rice at the hulled-rice discrimination machine, in which the hulling control unit includes a rotational speed change means configured to change a rotational speed of the husking roll in the hulling machine in accordance with the result of the examination of the hulled rice.

An invention according to Claim 2 of the present application is the hulling device according to claim 1, in which the husking roll includes a primary husking roll configured to rotate at a predetermined rotational speed and a secondary husking roll configured to rotate at a rotational speed lower than the rotational speed of the primary husking roll, and the rotational speed change means changes the rotational speed of the secondary husking roll so that the secondary husking roll rotates at a rotational speed higher than the rotational speed of the primary husking roll.

An invention according to Claim 3 of the present application is the hulling device according to claim 1 or 2, in which at least a husking ratio of the hulled rice is an examination item of the hulled rice, and the hulling control unit causes the rotational speed change means to change the rotational speed of the husking roll when the husking ratio has become lower than a predetermined value.

An invention according to Claim 4 of the present application is the hulling device according to any one of claims 1 to 3, in which at least a broken-rice ratio of the hulled rice is an examination item of the hulled rice, and the hulling control unit causes the rotational speed change means to change the rotational speed of the husking roll when an increase rate of the broken-rice ratio has become equal to or higher than a predetermined value.

An invention according to Claim 5 of the present application is the hulling device according to any one of claims 1 to 4, in which the hulled-rice discrimination machine includes a downflow gutter through which the hulled rice is arrayed and flows down, a light emission source configured to irradiate the hulled rice discharged from the downflow gutter with light, and a camera means capable of receiving reflected light and transmitted light from the hulled rice irradiated with light from the light emission source, and the light emission source includes a first illumination means provided on the camera means side of the hulled rice and capable of irradiating the hulled rice with light of a red color component, and a second illumination means provided on a far side of the hulled rice with respect to the camera means and capable of irradiating the hulled rice with light of a green color component.

An invention according to Claim 6 of the present application is the hulling device according to claim 5, in which, on a result of light reception by the camera means, the discharged hulled rice is discriminated as brown rice when received-light quantity of the light of the green color component is higher than a predetermined green-color-component threshold value, and the discharged hulled rice is discriminated as rice hull when received-light quantity of the light of the green color component is lower than the predetermined green-color-component threshold value and received-light quantity of the light of the red color component is higher than a predetermined red-color-component threshold value.

An invention according to Claim 7 of the present application is the hulling device according to claim 5 or 6, in which the light emission source further includes a third illumination means provided at a position on an extended line connecting the camera means and the hulled rice and capable of irradiating a background of the hulled rice with light of a blue color component, and it is discriminated that not the hulled rice but a foreign object is discharged from the downflow gutter when received-light quantity of the light of the blue color component is out of a predetermined range, on the result of light reception by the camera means.

An invention according to Claim 8 of the present application is the hulling device according to any one of claims 5 to 7, in which the camera means is capable of capturing a video of the hulled rice in addition to light reception of the reflected light and the transmitted light.

An invention according to Claim 9 of the present application is the hulling device according to any one of claims 5 to 8, in which the downflow gutter is extended to at least an observation region of the camera means in which the hulled rice is irradiated with light and can transmit light from the light emission source.

An invention according to Claim 10 of the present application is a hulling control system including: a hulling device including a hulling device configured to perform hulling through a husking roll, a hulled-rice determination means capable of determining quality of hulled rice discharged from the hulling device, and a hulling control unit capable of controlling the hulling device in accordance with a result of the determination of the hulled rice at the hulled-rice determination means; and a monitoring device connected to the hulling device in a wired or wireless manner and capable of receiving, outputting, and displaying the result of the determination of the hulled rice, in which a rotational speed of the husking roll in the hulling device can be changed in accordance with the result of the determination of the hulled rice output and displayed on the monitoring device.

An invention according to Claim 11 of the present application is the hulling control system according to claim 10, in which the hulling device includes an anomaly sensing means capable of sensing anomaly in the hulling device, and the monitoring device includes an anomaly determination means capable of determining a plurality of kinds of anomaly based on sensing information from the anomaly sensing means, and an anomaly display means capable of outputting and displaying a result of the determination by the anomaly determination means.

An invention according to Claim 12 of the present application is the hulling control system according to claim 11, in which the monitoring device includes an anomaly handling instruction display means capable of outputting and displaying a check content in accordance with priority in response to the result of the determination by the anomaly determination means.

### [Advantageous Effects of Invention]

In the invention according to Claim 1, the hulled rice discharged from the hulling machine is constantly examined by the hulled-rice discrimination machine and the rotational speed of the husking roll is appropriately changed in accordance with the result of the examination of the hulled rice, and thus quality of the hulled rice can be stably maintained in a favorable state.

In the invention according to Claim 2, the husking roll includes the primary husking roll configured to rotate at a predetermined rotational speed and the secondary husking roll configured to rotate at a rotational speed lower than the rotational speed of the primary husking roll, and the rotational speed of the secondary husking roll can be changed in accordance with the result of the examination of the hulled rice by the hulled-rice discrimination machine so that the secondary husking roll rotates at a rotational speed higher than the rotational speed of the primary husking roll. Accordingly, an appropriate circumferential speed difference between the primary husking roll and the secondary husking roll can be applied to supplied grain, and a favorable and stable husking ratio can be continuously maintained.

In the invention according to Claim 3, at least the husking ratio of the hulled rice is an examination item of the hulled rice in the hulled-rice discrimination machine, and the rotational speed of the husking roll can be changed when the husking ratio has become lower than a predetermined value. Accordingly, a favorable and stable husking ratio can be continuously maintained.

In the invention according to Claim 4, at least the broken-rice ratio of the hulled rice is an examination item of the hulled rice in the hulled-rice discrimination machine, and the rotational speed of the husking roll can be changed when the increase rate of the broken-rice ratio has become equal to or higher than a predetermined value. Accordingly, the broken-rice ratio can be continuously maintained low.

In the invention according to Claim 5, based on a knowledge, which is obtained in a verification experiment of the present invention, that transmittivity of light of the green color component and reflectivity of light of the red color component are lower and higher, respectively, for rice hull than for brown rice, the first illumination means capable of irradiating the hulled rice as a mixture of rice hull and brown rice with light of the red color component and the second illumination means capable of irradiating the hulled rice with light of the green color component are installed, and reflected and transmitted light of each light are received by the camera means. Accordingly, the accuracy of discrimination between rice hull and brown rice can be significantly improved as compared to conventional cases, and control on the hulling machine can be executed at an appropriate timing.

In the invention according to Claim 6, on a result of light reception by the camera means, the discharged hulled rice is discriminated as brown rice when the received-light quantity of the light of the green color component is higher than a predetermined green-color-component threshold value. The hulled rice discharged from the downflow gutter is discriminated as rice hull when the received-light quantity of the light of the green color component is lower than the predetermined green-color-component threshold value and the received-light quantity of the light of the red color component is higher than a predetermined red-color-component threshold value. Accordingly, the kind of the hulled rice can be immediately discriminated without complicate discrimination processing.

In the invention according to Claim 7, since the third illumination means capable of irradiating the background with light of the blue color component is provided at a position on an extended line connecting the camera means and the hulled rice, it can be immediately discriminated that not the hulled rice but a foreign object is discharged from the downflow gutter when the received-light quantity of the light of the blue color component is out of a predetermined range.

In the invention according to Claim 8, since the camera means capable of capturing a video of the hulled rice in addition to light reception of the reflected light and the transmitted light is applied, broken rice and cracked rice can be discriminated through image analysis of the video or the like.

In the invention according to Claim 9, the downflow gutter is extended to the observation region of the camera means and formed of a transparent material such as glass. Accordingly, air resistance is unlikely to occur to a grain of the hulled rice and the posture of the grain is stable as compared to a conventional case in which the hulled rice is discharged from a lower end of the downflow gutter, and thus the accuracy of discrimination of the hulled rice can be improved.

In the invention according to Claim 10, since the hulling device and the monitoring device connected to the hulling device in a wired or wireless manner and capable of receiving, outputting, and displaying the result of the determination of hulled rice are provided, the rotational speed of the husking roll in the hulling machine can be changed in accordance with the result of the determination of the hulled rice output and displayed on the monitoring device. With this configuration, the hulling device can be constantly appropriately controlled, and the quality of the hulled rice can be appropriately managed.

In the invention according to Claim 11, the hulling device includes the anomaly sensing means capable of sensing anomaly, and a result of the anomaly determination can be output and displayed on the monitoring device. Accordingly, occurrence of anomaly in the hulling device can be found early, and the anomaly can be appropriately handled.

In the invention according to Claim 12, a specific check content in accordance with priority can be output and displayed on the monitoring device in response to the result of the determination by the anomaly determination means. Accordingly, an anomalous state can be adjusted and repaired early.

### [Brief Description of Drawings]

[Figure 1] Figure 1 is a side view illustrating an embodiment of a hulling machine in a hulling device of the present invention.
[Figure 2] Figure 2 is a perspective view illustrating an embodiment of a husking roll drive device in the hulling machine.
[Figure 3] Figure 3 is an exploded perspective view illustrating a detailed structure of a belt clutch mechanism of a first drive system.
[Figure 4A] Figure 4A is a schematic diagram illustrating actuation states of the first drive system and a second drive system when rolls are new.
[Figure 4B] Figure 4B is a schematic diagram illustrating actuation states of the first drive system and the second drive system when the rolls are abraded.
[Figure 5] Figure 5 is a schematic side view illustrating a chain-sprocket transmission mechanism configured to rotate a support rod member.
[Figure 6] Figure 6 is a schematic explanatory diagram illustrating link of chains and sprockets when viewed in the direction of arrow A in Figure 5.
[Figure 7] Figure 7 is a schematic sectional view illustrating an embodiment of a hulled-rice discrimination machine in the hulling device of the present invention.
[Figure 8] Figure 8 is a schematic side view illustrating an aspect of hulled-rice discrimination at the hulled-rice discrimination machine.
[Figure 9A] Figure 9A is a graph illustrating the relation between light reflectance and light wavelength for each of rice hull and brown rice.
[Figure 9B] Figure 9B is a graph illustrating the relation between light transmittance and light wavelength.
[Figure 10] Figure 10 is a flowchart for description of an embodiment of a discrimination method of discriminating between rice hull and brown rice in the hulling device of the present invention.
[Figure 11] Figure 11 is a table of experiment results with the hulling device of the present invention.
[Figure 12] Figure 12 is a diagram for description of an example of a control aspect of the hulling device of the present invention.
[Figure 13] Figure 13 is a schematic side view illustrating another embodiment of the aspect of hulled-rice discrimination at the hulled-rice discrimination machine.
[Figure 14] Figure 14 is a diagram illustrating an overview of a monitoring control system in another example of the present invention.
[Figure 15] Figure 15 is a diagram illustrating an exemplary display aspect of a monitoring control PC in another example of the present invention.
[Figure 16] Figure 16 is a diagram illustrating exemplary breakdown prediction kinds and handling processes in another example of the present invention.

### [Description of Embodiments]

A hulling device of the present invention mainly includes a hulling machine 1 and a hulled-rice discrimination machine 70, and an embodiment thereof will be described below with reference to the accompanying drawings.

### (Hulling machine)

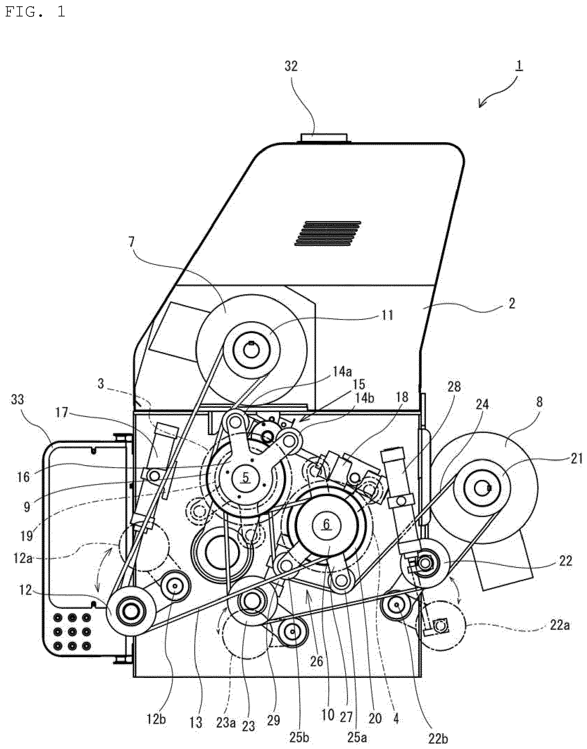

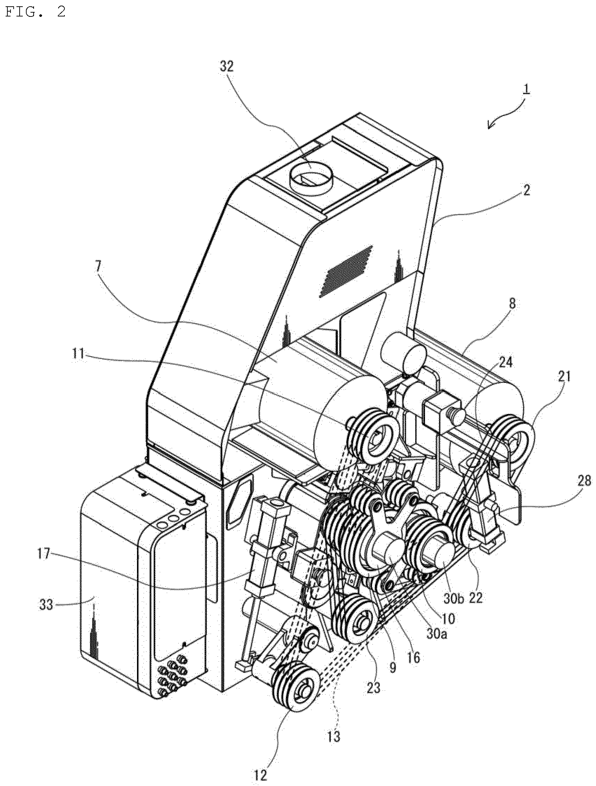

Figure 1 is a side view illustrating a whole husking roll drive device of the hulling machine 1, and Figure 2 is a perspective view of the husking roll drive device. In Figures 1 and 2, a primary husking roll 3 and a secondary husking roll 4 are disposed in the hulling machine 1, the primary husking roll 3 being pivotally supported in a rotatable manner to a roll shaft 5 at a lower part in a machine casing 2, the secondary husking roll 4 being pivotally supported to a roll shaft 6 so that the distance to the primary husking roll 3 can be adjusted, the husking rolls being configured to rotate inward with respect to each other at speeds different from each other.

A drive motor 7 to be described later is provided at a central part of the machine casing 2, and a drive motor 8 is provided on a side surface of the machine casing 2. A first large-diameter pulley 9 is mounted outside of the roll shaft 5 on one side in the axial direction thereof, and a first small-diameter pulley 10 is mounted outside of the roll shaft 6 on the other side in the axial direction thereof. A first drive system is formed by coupling the first large-diameter pulley 9, the first small-diameter pulley 10, a drive pulley 11 of the drive motor 7, and a first idler pulley 12 provided at a lower part in the machine casing 2 through an endless belt 13.

The front surface of the endless belt 13 in the first drive system is wound around the first large-diameter pulley 9 and the back surface thereof is wound around the first small-diameter pulley 10 so that the first large-diameter pulley 9 and the first small-diameter pulley 10 rotate inward with respect to each other. In Figure 1, the endless belt 13 is configured to rotate anticlockwise.

A support rod member 16 is disposed on the first large-diameter pulley 9 in the first drive system, the support rod member 16 having a V shape and being configured to rotate on a rotational locus along the outer periphery of the first large-diameter pulley 9 with a center at the roll shaft 5. A belt clutch mechanism 15 is formed through rotation of the support rod member 16, the belt clutch mechanism 15 being configured to turn "on" and "off" transfer of power of the endless belt 13 to the first large-diameter pulley 9. Reference sign 14a and 14b denote a pair of tension clutch pulleys attached to a leading end of the support rod member 16. The position of the belt clutch mechanism 15 illustrated with a solid line in Figures 1 and 2 is a position where the endless belt 13 is wound around the first large-diameter pulley 9.

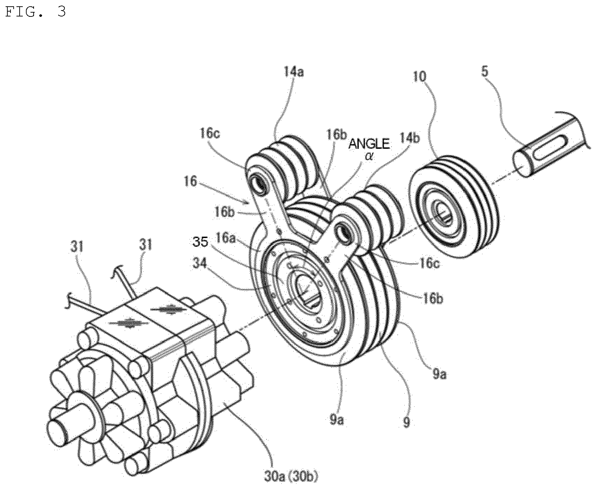

The first idler pulley 12 in the first drive system is configured to rotate about a pivot 12b to a position (reference sign 12a) illustrated with a dashed and single-dotted line as a movable shaft of an air cylinder 17 expands and contracts. The belt clutch mechanism 15 in the first drive system is configured to be able to rotate, by a rotary actuator 30a illustrated in Figure 3, about the roll shaft 5 to a position illustrated with a dashed and single-dotted line, in other words, a position at which the endless belt 13 is avoided being wound around the large-diameter pulley 9.

A second small-diameter pulley 19 is mounted on the roll shaft 5 at a position on the inner side in the axial direction thereof and close to the first large-diameter pulley 9, and a second large-diameter pulley 20 is mounted on the roll shaft 6 at a position on the inner side in the axial direction thereof and close to the first small-diameter pulley 10. A second drive system is formed by coupling the second small-diameter pulley 19, the second large-diameter pulley 20, a drive pulley 21 of the drive motor 8, and a second idler pulley 22 and a third idler pulley 23 provided at a lower part in the machine casing 2 through an endless belt 24.

The back surface of the endless belt 24 in the second drive system is wound around the second small-diameter pulley 19 and the front surface thereof is wound around the second large-diameter pulley 20 so that the second small-diameter pulley 19 and the second large-diameter pulley 20 rotate inward with respect to each other. In Figure 1, the endless belt 24 is configured to rotate clockwise.

A support rod member 27 is disposed on the second large-diameter pulley 20 in the second drive system, the support rod member 27 having a V shape and being configured to rotate on a rotational locus along the outer periphery of the second large-diameter pulley 20 with a center at the roll shaft 6. A belt clutch mechanism 26 is formed through rotation of the support rod member 27, the belt clutch mechanism 26 being configured to turn "on" and "off" transfer of power of the endless belt 24 to the second large-diameter pulley 20. Reference signs 25a and 25b denote a pair of tension clutch pulleys attached to a leading end of the support rod member 27. The position of the belt clutch mechanism 26 illustrated with a solid line in Figures 1 and 2 corresponds to a state in which the power is not transferred.

The second idler pulley 22 in the second drive system can rotate about a pivot 22b to a position (reference sign 22a) illustrated with a dashed and single-dotted line as a movable shaft of an air cylinder 28 expands and contracts. The third idler pulley 23 can rotate about a pivot to a position (reference sign 23a) illustrated with a dashed and single-dotted line as a movable shaft of an air cylinder 29 expands and contracts. The belt clutch mechanism 26 in the second drive system is configured to be able to rotate, by an air cylinder (not illustrated) or a rotary actuator 30b illustrated in Figure 3, about the roll shaft 6 to a position illustrated with a dashed and single-dotted line where power is transferred.

Figure 3 is a perspective view illustrating a detailed structure of the belt clutch mechanism 15 in the first drive system. The first small-diameter pulley 10 and the first large-diameter pulley 9 are mounted on the roll shaft 5 of the primary husking roll 3, and the V-shaped support rod member 16 is provided to sandwich a boss-part end-face intermediate 9a of the first large-diameter pulley 9. The outer diameter of the first large-diameter pulley 9 is 220 mm approximately, and the outer diameter of the first small-diameter pulley 10 is 160 mm approximately.

A base end part 16a of the support rod member 16 is rotatably attached to the roll shaft 5 through a bearing 35. Arm parts 16b having a V shape extend from the base end part 16a toward the outer periphery of the first large-diameter pulley 9, and the internal angle (α) between the arm parts 16b is 60° approximately. Tension clutch pulleys 14a and 14b that are rotatable are attached to two leading end parts 16c and 16c of the support rod member 16. Accordingly, although the first large-diameter pulley 9 has an outer diameter of 220 mm approximately, the endless belt 13 can be reliably prevented from being wound around the first large-diameter pulley 9 in the state in which the belt clutch mechanism 15 does not transfer power as illustrated with a dashed and single-dotted line in Figure 1, thereby achieving reliable operation of power "on" and "off".

A rotary actuator 30 is attached to the support rod member 16 through a mount 34, and the support rod member 16 is rotated about the roll shaft 5 in the circumferential direction as vanes (blades) in the rotary actuator 30 slide with air pressure supplied from an air pipe 31. The rotary actuator 30 may be a commercially available rotary actuator such as RAK300 manufactured by KOGANEI CORPORATION.

The belt clutch mechanism 26 in the second drive system has a configuration same as that in Figure 3 except that the support rod member 27 is attached in a different direction. Reference sign 32 in Figures 1 and 2 denotes a supply inlet through which grain is supplied and that is provided at an upper part in the machine casing 2, a vibration feeder capable of adjusting the flow rate of grain is provided directly below the supply inlet 32, and a chute through which grain is supplied between the pair of the primary husking roll 3 and the secondary husking roll 4 is provided in the machine casing 2.

Reference sign 33 denotes an air-pressure control device provided at a side part of the machine casing 2, and an electromagnetic valve, a logic relay, a breaker, a terminal mount, and the like (each not illustrated) are provided inside the air-pressure control device 33 to feed high-pressure air supplied from an air supply source such as a compressor (not illustrated) to the air cylinders 17, 28, and 29, the rotary actuator 30, and the like. Reference sign 18 denotes a roll gap adjustment means configured to adjust a roll gap so that a set husking ratio is achieved.

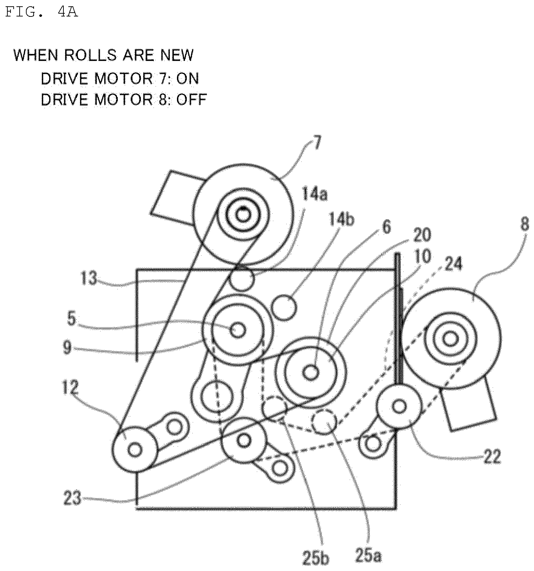

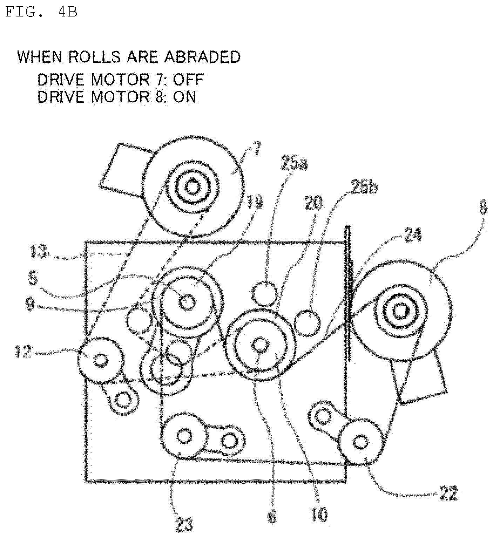

The procedure of operation of the husking roll drive device of the present invention will be described below with reference to Figure 4.

When new rubber rolls are mounted as the primary husking roll 3 and the secondary husking roll 4, first, the position of the belt clutch mechanism 15 is adjusted and the endless belt 13 is strained by the first idler pulley 12 to start husking work by the first drive system.

Specifically, the rotary actuator 30a is controlled to adjust the tension clutch pulleys 14a and 14b of the belt clutch mechanism 15 through rotation to positions illustrated with a solid line in Figure 4A, thereby turning "on" power transfer of the endless belt 13 to the first large-diameter pulley 9 in the belt clutch mechanism 15. Then, the movable shaft of the air cylinder 17 is extended to move the first idler pulley 12 to a position illustrated with a solid line in Figure 4A so that the endless belt 13 is strained. The belt clutch mechanism 26 is not actuated and power transfer of the endless belt 24 to the second large-diameter pulley 20 is maintained "off".

In this state, when the hulling machine 1 is powered on and drive of the first drive motor 7 is started (the drive motor 8 is stopped), drive power of the drive motor 7 is transferred to the first large-diameter pulley 9 and the first small-diameter pulley 10 through the endless belt 13 in the first drive system. Then, the primary husking roll 3 rotates at high speed and the secondary husking roll 4 rotates at low speed, whereas the primary husking roll 3 and the secondary husking roll 4 rotate inward with respect to each other. Grain supplied from the supply inlet 32 receives a husking effect by the circumferential speed difference between the primary husking roll 3 and the secondary husking roll 4 and pressing force thereof.

The primary husking roll 3 and the secondary husking roll 4 gradually abrade as husking work is continued while the first drive system is driven. The primary husking roll 3 rotating at high speed has larger accumulative contact area with rice hull than the secondary husking roll 4 rotating at low speed, and thus abrades earlier. As a result, the outer diameter of the primary husking roll 3 decreases, and the circumferential speed difference between the primary husking roll 3 and the secondary husking roll 4 decreases. As the circumferential speed difference decreases, grain supplied from the supply inlet 32 becomes unlikely to receive the husking effect by the circumferential speed difference, which affects the husking ratio of hulled rice and the quality of rice grain. Thus, in the present embodiment, driving means can be switched from the first drive system to the second drive system under control of a hulling control unit (not illustrated) to be described later.

When driving means is to be switched from the first drive system to the second drive system under the above-described control of the hulling control unit, drive of the first drive motor 7 is stopped first, and then the position of the first idler pulley is rotated upward through an operation of the air cylinder 17 to loosen the endless belt 13. Then, the rotary actuator 30a is controlled to rotate the tension clutch pulleys 14a and 14b of the belt clutch mechanism 15 anticlockwise by 175° approximately to positions illustrated with dashed lines in Figure 4B so that power transfer of the endless belt 13 to the first large-diameter pulley 9 is turned "off" in the belt clutch mechanism 15.

In addition, the position of the belt clutch mechanism 26 is adjusted and the endless belt 24 is strained by the second idler pulley 22 and the third idler pulley 23 to start the second drive system. Specifically, the rotary actuator 30b is controlled to rotate the tension clutch pulleys 25a and 25b of the belt clutch mechanism 26 anticlockwise by 175° approximately to positions illustrated with solid lines in Figure 4B so that power transfer of the endless belt 24 to the second large-diameter pulley 20 is turned "on" in the belt clutch mechanism 26. Then, the movable shafts of the air cylinders 28 and 29 are extended to move the second idler pulley 22 and the third idler pulley 23 to positions illustrated with a solid line in Figure 4B so that the endless belt 24 is strained.

In this state, when drive of the second drive motor 8 is started (the drive motor 7 is stopped), drive power of the drive motor 8 is transferred to the second large-diameter pulley 20 and the second small-diameter pulley 19 through the endless belt 24 in the second drive system. Then, unlike the above description, the secondary husking roll 4 rotates at high speed and the primary husking roll 3 rotates at low speed, whereas the secondary husking roll 4 and the primary husking roll 3 rotate inward with respect to each other, providing a husking effect.

The above-described operation of switching the motors, the belt clutch mechanisms, and the idler pulleys is repeated to continuously perform husking work.

In the present embodiment, a clutch configured to slide forward and backward in the direction of the rotational shaft of a husking roll is not used unlike conventional cases, and thus when the rotational shaft deforms through thermal expansion, it is possible to easily alternately switch the high speed side to the low speed side or the low speed side to the high speed side. Moreover, since no minute component such as a "sliding piece" configured to slide in the rotational shaft direction is not used, excellent durability is obtained when the operation of switching the belt clutch mechanisms and the idler pulleys is repeatedly performed. Furthermore, no large rotational drive power is needed without a configuration in which a drive motor is directly connected to the rotational shaft of a husking roll as in conventional cases.

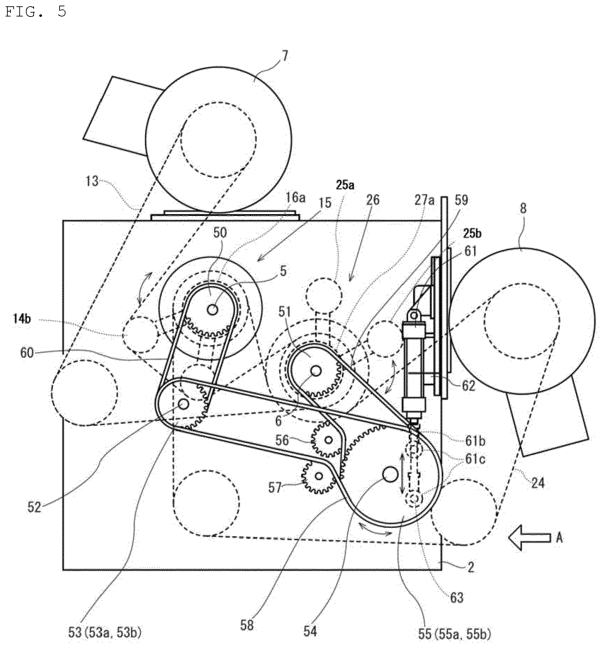

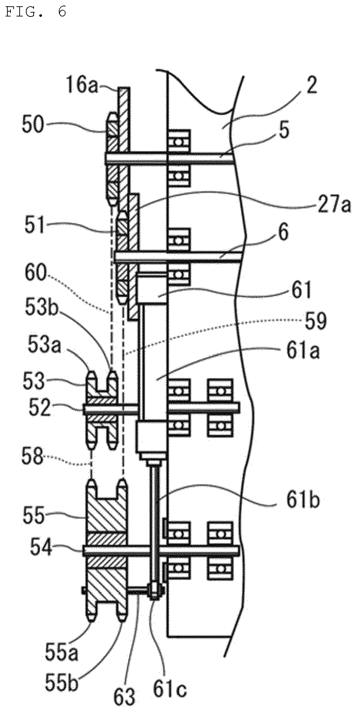

Subsequently, another embodiment of actuators configured to rotate the support rod members 16 and 27 will be described below with reference to Figures 5 and 6.

Figure 5 is a schematic side view illustrating a chain-sprocket transmission mechanism configured to rotate the support rod members 16 and 27. Figure 6 is a schematic explanatory diagram illustrating link of chains and sprockets when viewed in the direction of arrow A in Figure 5.

In Figures 5 and 6, a first sprocket 50 is fixed to the base end part 16a of the support rod member 16 of the belt clutch mechanism 15 in the first drive system by a bolt and a nut or the like (not illustrated), and a second sprocket 51 is fixed to a base end part 27a of the support rod member 27 of the belt clutch mechanism 26 in the second drive system by a bolt and a nut or the like.

Below the first sprocket 50, a relay double sprocket 53 is rotatably attached to a rotational shaft 52 pivoted to the machine casing 2. Below the second sprocket 51, a synchronization double sprocket 55 is rotatably attached to a rotational shaft 54 pivoted to the machine casing 2. In addition, the machine casing 2 is provided with a plurality of tension sprockets 56 and 57 at appropriate places corresponding to the double sprockets 53 and 55.

The first sprocket 50, the second sprocket 51 and the relay the double sprocket 53 each have a diameter of 116 mm and 27 teeth. The synchronization double sprocket 55 has a diameter of 226 mm and 54 teeth to achieve a speed ratio of 1:2. Specifically, the first sprocket 50, the second sprocket 51, and the relay the double sprocket 53 are each rotated by a rotation angle of 180° when the synchronization double sprocket 55 is rotated by a rotation angle of 90°.

In the above-described sprocket disposition, a differential chain 58 is wound around a sprocket 55a of the synchronization double sprocket 55 on one side, a sprocket 53a of the relay the double sprocket 53 on the one side, and a tension sprocket 57. A differential chain 59 is wound around a sprocket 55b of the synchronization double sprocket 55 on the other side, the second sprocket 51, and a tension sprocket 56. A transmission chain 60 that transfers power at a speed ratio of 1:1 is wound around a sprocket 53b of the relay the double sprocket 53 on the other side and the first sprocket 50.

A rod-type air cylinder 61, a movable rod of which expands and contracts on a straight line may be used as an actuator that rotates the synchronization double sprocket 55. In the rod-type air cylinder 61, a cylinder part 61a is fixed to the machine casing 2 through a base 62, and a leading end part 61c of a movable rod part 61b is pivoted to the synchronization double sprocket 55 through a pivot pin 63. The synchronization double sprocket 55 can rotate along with slide movement of the movable rod part 61b. For example, the synchronization double sprocket 55 can rotate by 90° approximately when the movable rod part 61b has a stroke of 100 mm approximately.

Effects of the above-described chain-sprocket transmission mechanism will be described below with reference to Figures 4, 5, and 6.

When new rubber rolls are mounted as the primary husking roll 3 and the secondary husking roll 4, first, the positions of the belt clutch mechanisms 15 and 26 are simultaneously adjusted to start husking work by the first drive system. Specifically, as the movable rod part 61b of the rod-type air cylinder 61 is expanded (refer to Figure 5), the synchronization double sprocket 55 is rotated clockwise by 90° approximately, and accordingly, in the first drive system, the relay the double sprocket 53, the first sprocket 50, and the base end part 16a are rotated clockwise by 180° approximately through the differential chain 58 and the transmission chain 60.

Accordingly, the tension clutch pulleys 14a and 14b are moved to positions at which the endless belt 13 is wound around the first large-diameter pulley 9, and power transfer to the first large-diameter pulley 9 is turned "on". In the second drive system, the base end part 27a is rotated clockwise by 180° approximately through the differential chain 59. Accordingly, the tension clutch pulleys 25a and 25b are moved to positions at which the endless belt 24 is avoided from being wound around the second large-diameter pulley 20, and power transfer to the second large-diameter pulley 20 is turned "off" (state illustrated in Figures 4A and 1).

In this state, when the hulling machine 1 is powered on and drive of the first drive motor 7 is started (the drive motor 8 is stopped), drive power of the drive motor 7 is transferred to the first large-diameter pulley 9 and the first small-diameter pulley 10 through the endless belt 13 in the first drive system. Then, the primary husking roll 3 rotates at high speed and the secondary husking roll 4 rotates at low speed, whereas the primary husking roll 3 and the secondary husking roll 4 rotate inward with respect to each other. Grain supplied from the supply inlet 32 receives a husking effect by the circumferential speed difference between the primary husking roll 3 and the secondary husking roll 4 and pressing force thereof.

As husking work is continued while the first drive system is driven, the primary husking roll 3 and the secondary husking roll 4 gradually abrade and the circumferential speed difference decreases. As the circumferential speed difference decreases, grain supplied from the supply inlet 32 becomes unlikely to receive the husking effect by the circumferential speed difference, which affects the husking ratio of hulled rice and the quality of rice grain, and thus driving means can be switched from the first drive system to the second drive system under control of the hulling control unit to be described later.

At switching from the first drive system to the second drive system under the above-described control of the hulling control unit, drive of the first drive motor 7 is stopped first, and then the synchronization double sprocket 55 is rotated anticlockwise by 90° approximately as the movable rod part 61b of the rod-type air cylinder 61 is contracted (refer to Figure 5). Accordingly, in the first drive system, the relay the double sprocket 53, the first sprocket 50, and the base end part 16a are rotated anticlockwise by 180° approximately through the differential chain 58 and the transmission chain 60 so that power transfer of the endless belt 13 to the first large-diameter pulley 9 is turned "off". In the second drive system, the base end part 27a is rotated anticlockwise by 180° approximately through the differential chain 59 so that power transfer of the endless belt 24 to the second large-diameter pulley 20 is turned "on" (state illustrated in Figures 5 and 4B).

In this state, when drive of the second drive motor 8 is started (the drive motor 7 is stopped), drive power of the drive motor 8 is transferred to the second large-diameter pulley 20 and the second small-diameter pulley 19 through the endless belt 24 in the second drive system. Then, unlike the above description, the secondary husking roll 4 rotates at high speed and the primary husking roll 3 rotates at low speed, whereas the secondary husking roll 4 and the primary husking roll 3 rotate inward with respect to each other, providing a husking effect.

The above-described operation of switching the motors, the belt clutch mechanisms, and the idler pulleys is repeated to continuously perform husking work. With such employment of the rod-type air cylinder and the chain-sprocket transmission mechanism, the belt clutch mechanisms of the first drive system and the second drive system can be synchronized through one air cylinder. Moreover, an electromagnetic valve, a logic relay, and the like for synchronization are unnecessary unlike a case in which a plurality of rotary actuators are used, and thus manufacturing cost can reduced with a simple configuration.

### (Hulled-rice discrimination machine)

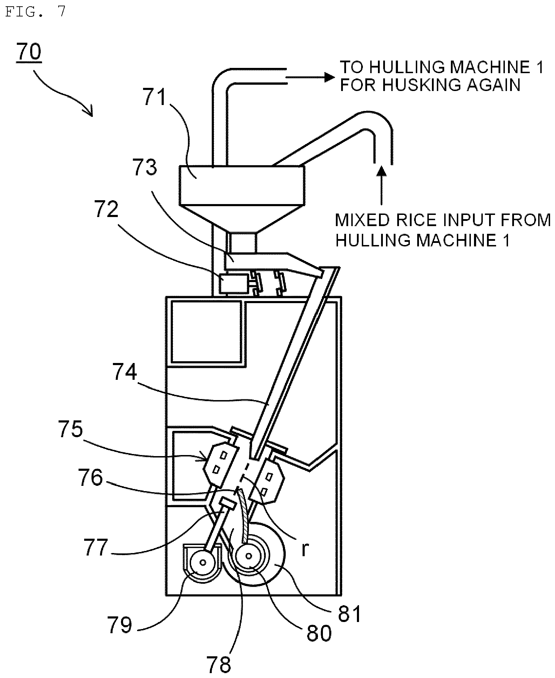

The hulled-rice discrimination machine 70, which is provided along with the hulling machine 1 in the hulling device, will be described below. Figure 7 illustrates a schematic sectional view of the hulled-rice discrimination machine 70 provided along with the above-described hulling machine 1. The hulled-rice discrimination machine 70 includes, at an upper part, a hulled rice hopper 71 that receives hulled rice discharged from the hulling machine 1, and also includes a vibration supply mechanism and a downflow supply mechanism, the vibration supply mechanism being constituted by a vibration device 72 and a vibration trough 73, the downflow supply mechanism including a tilted downflow gutter 74.

The hulled-rice discrimination machine 70 includes an optical examination unit 75 and an ejector unit 76 at a lower part, the optical examination unit 75 being disposed opposite to the falling locus (a dashed line r in Figure 7) of hulled rice at a lower end of the downflow gutter 74, the ejector unit 76 being configured to discriminate between brown rice and rice hull in hulled rice based on a result of examination at the optical examination unit 75 and remove only the rice hull from the hulled rice.

A brown-rice grain collection hopper 77 that collects brown rice on the lower side of the falling locus and a rice-hull collection hopper 78 that collects rice hull removed from the falling locus are provided below the ejector unit 76. The brown-rice grain collection hopper 77 is provided with a brown-rice discharge unit 79 including a conveyance mechanism configured to discharge brown rice out of the machine. The rice-hull collection hopper 78 is provided with a rice-hull discharge unit 80 capable of transporting rice hull to the hulling machine 1 to husk the rice hull again. The rice-hull discharge unit 80 may be provided with a grain lifting machine 81 capable of returning rice hull to the husking-roll hulling machine 1.

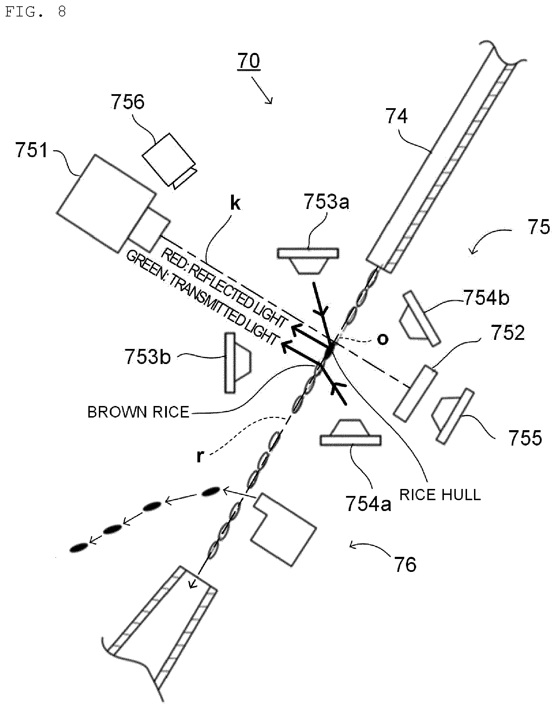

Figure 8 is a schematic side view illustrating an aspect of hulled-rice discrimination at the hulled-rice discrimination machine. The following description will be made with reference to Figure 8.

The hulled-rice discrimination machine 70 includes the optical examination unit 75 disposed below the downflow gutter 74 as described above, and the ejector unit 76 below the optical examination unit 75. The optical examination unit 75 is provided with a full-color camera 751 (camera means) on one side (front side) facing a hulled-rice downflow locus r downstream of the downflow gutter 74. In addition, a background 752 is provided on the other side of the downflow locus r on an optical axis k of the full-color camera 751.

In the optical examination unit 75, first illumination means 753a and 753b, second illumination means 754a and 754b, and a third illumination means 755 are provided on the full-color camera 751 side of the hulled-rice downflow locus r, the first illumination means 753a and 753b being configured to illuminate hulled rice, the second illumination means 754a and 754b being configured to illuminate hulled rice on the far side of the hulled-rice downflow locus r with respect to the full-color camera 751, the third illumination means 755 being configured to illuminate the background 752. Note that an observation region o of the full-color camera 751 is located at the intersection point of the downflow locus r and the optical axis k.

The first illumination means 753a and 753b, the second illumination means 754a and 754b, and the third illumination means 755 described above each include a single-color light emission source. As a most preferable example in the present embodiment, a light source made of a red LED element is employed as each of the first illumination means 753a and 753b, a light source made of a green LED element is employed as each of the second illumination means 754a and 754b, and a light source made of a blue LED element is employed as the third illumination means 755. Note that the employed LED elements may be single-color LED elements as well as RGB LED elements.

More specifically, when hulled rice as a selection target object is irradiated with light of a red color component from the first illumination means 753a and 753b, reflected light thereof is received by a red-color-component light receiving element of the full-color camera 751. When hulled rice as a selection target object is irradiated with light of a green color component from the second illumination means 754a and 754b, transmitted light thereof is received by a green-color-component light receiving element of the full-color camera 751. When the background 752 is irradiated with light of a blue color component from the third illumination means 755, whether the selection target object has passed through the observation region o and whether a foreign object other than hulled rice has passed through the observation region o are discriminated based on the received-light quantity of the blue color component at the full-color camera 751.

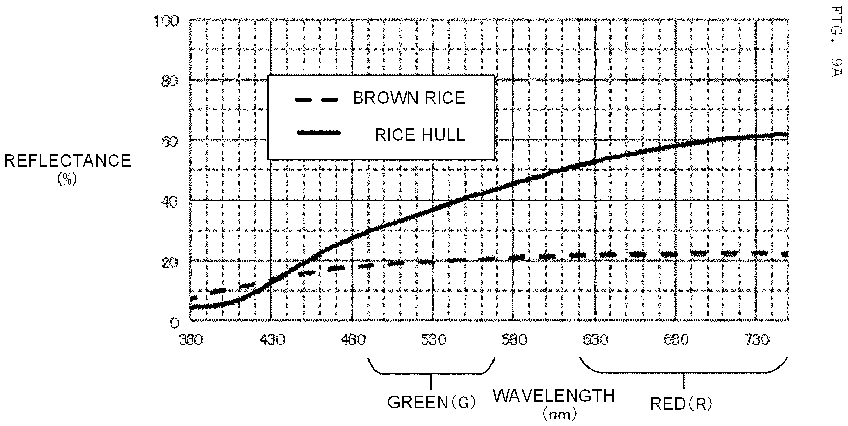

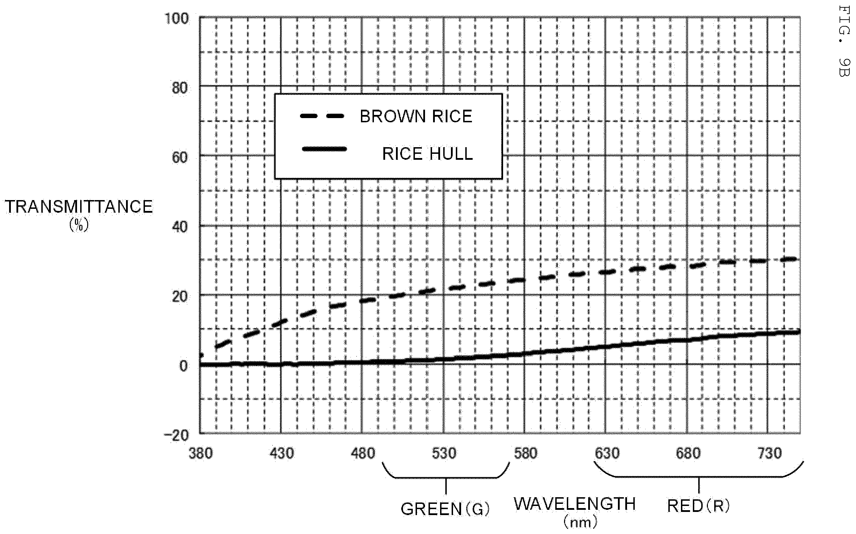

Note that the above-described preferable embodiment is supported by reasons as follows. Specifically, Figures 9A and 9B are based on results of a verification experiment of the present invention, Figure 9A illustrating the relation between light wavelength and reflectance for each of brown rice and rice hull, Figure 9B illustrating a graph of the relation between light wavelength and transmittance, and there is not large difference in light transmittance between green and red for brown rice and rice hull in hulled rice as a selection target object.

However, it can be observed that difference in light reflectance for brown rice and rice hull is larger for red than for green. Thus, it is preferable based on the above-described optical characteristic to employ a light source made of a red LED element as each of the first illumination means 753a and 753b for reception of reflected light at the full-color camera 751, and it is possible to more accurately discriminate the kind of hulled rice as a selection target object.

When a white light source such as a fluorescent light is used as each of the first illumination means 753a and 753b, the second illumination means 754a and 754b, and the third illumination means 755, information as a mixture of both components of reflected light and transmitted light is acquired by the full-color camera 751, and accordingly, a characteristic amount (characteristic received-light quantity) is unlikely to be detected and the accuracy of discrimination potentially decreases.

Although red is set to the first illumination means 753a and 753b, green is set to the second illumination means 754a and 754b, and blue is set to the third illumination means 755 as the preferable example in the present embodiment, the setting is not necessarily limited thereto but combinations in Table 1 below are possible.

**[Table 1]**

| First illumination means | Second illumination means | Third illumination means |
|---|---|---|
| Green | Red | Blue |
| Green | Blue | Red |
| Blue | Green | Red |
| Red | Blue | Green |
| Blue | Red | Green |

Subsequently, a method of discriminating between rice hull and brown rice in the above-described hulled-rice discrimination machine 70 will be described below. As described above, when a single-color light source is used as each of the first illumination means 753a and 753b, the second illumination means 754a and 754b, and the third illumination means 755, rice hull and brown rice can be more accurately discriminated, and in addition, a foreign object other than rice hull and brown rice can be discriminated.

Specifically, when brown rice passes through the observation region o, the received-light quantity is low at the red-color-component (reflection-component) light receiving element of the full-color camera 751 and is high at the green-color-component (transmission-component) light receiving element of the full-color camera 751 because optical transmittivity is high and optical reflectivity is low for brown rice than for rice hull as illustrated in Figures 9A and 9B.

When rice hull passes through the observation region o, the received-light quantity is high at the red-color-component (reflection-component) light receiving element of the full-color camera 751 and is low at the green-color-component (transmission-component) light receiving element of the full-color camera 751 because optical transmittivity is low and optical reflectivity is high for rice hull than for brown rice.

Note that the received-light quantity of the blue color component at the full-color camera 751 has no large difference in magnitude between brown rice and rice hull, and thus is substantially constant. This is indicated in Table 2.

**[Table 2]**

| RGB component | Passing of rice hull | Passing of brown rice |
|---|---|---|
| R | Display of high received-light quantity | Display of low received-light quantity |
| G | Display of low received-light quantity | Display of high received-light quantity |
| B | Display of constant received-light quantity | Display of constant received-light quantity |

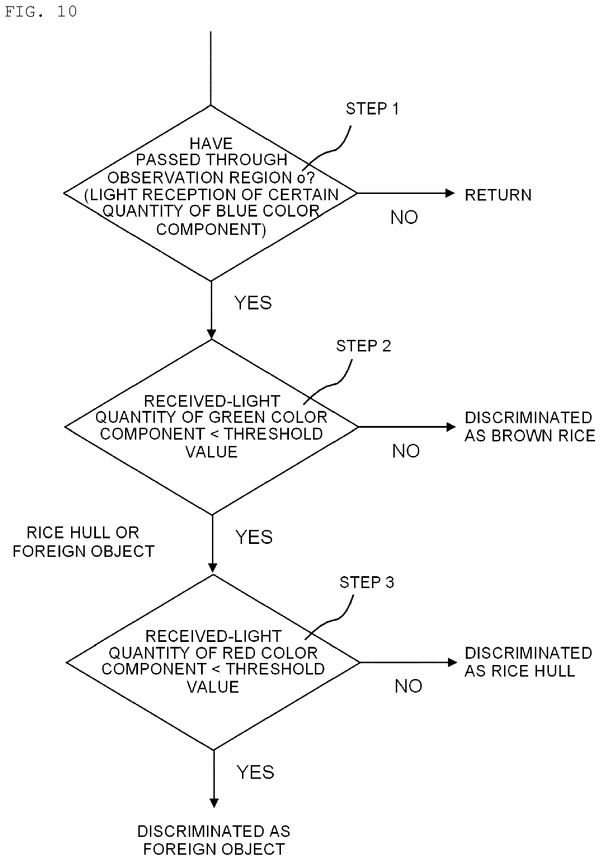

Figure 10 is a flowchart of execution of the above-described discrimination method. At step 1, whether hulled rice passes through the observation region o is discriminated based on the received-light quantity of the blue color component at the full-color camera 751. At step 2, it is checked whether the received-light quantity of the green color component at the full-color camera 751 is higher or lower than a predetermined green-color-component threshold value, and accordingly, it is discriminated whether brown rice, for which transmittivity is high, has passed or rice hull or a foreign object other than brown rice has passed. Subsequently at step 3, it is checked whether the received-light quantity of the red color component at the full-color camera 751 is higher or lower than a predetermined red-color-component threshold value, and accordingly, it is discriminated whether rice hull has passed or a foreign object other than rice hull has passed.

Note that, at steps 2 and 3 described above, a ratio of the received-light quantity of the red color component as a reflection component and the received-light quantity of the green color component as a transmission component (for example, the value of "reflection component/transmission component") may be calculated, and rice hull may be discriminated when the value is larger than a predetermined threshold value, or brown rice may be discriminated when the value is smaller than the predetermined threshold value.

Although the above description is made on the configuration in which the optical examination unit 75 discriminates between rice hull and brown rice through examination, an image capturing camera 756 (camera means) is provided in the optical examination unit 75 of the present invention as illustrated in Figure 8 and configured to be able to capture a video of brown rice having passed through the observation region o of the optical examination unit 75 and examine whether the brown rice is broken rice, immature rice, or cracked rice through image analysis. Specifically, whether brown rice having passed is immature rice can be discriminated based on the color components of the brown rice, and broken rice and cracked rice can be discriminated by acquiring the shape and dimension values through image analysis along with the color components.

### (Hulling control unit)

Subsequently, the hulling control unit capable of controlling the hulling machine 1 and the hulled-rice discrimination machine 70 described above in the hulling device of the present invention will be described below. Note that the hulling control unit is connected through signal lines to control at least the hulling machine 1 and the hulled-rice discrimination machine 70, and in the present embodiment, is installed in the hulling machine 1 or the hulled-rice discrimination machine 70 together with a non-illustrated setting input means.

The hulling control unit of the present embodiment receives an output signal from the optical examination unit 75 and performs the above-described determination of the quality state of hulled rice through analysis or the like. Then, the hulling control unit controls, through a rotational speed change means based on a result of the quality state determination, the hulling machine 1 to switch driving means from the first drive system to the second drive system. Specifically, control is performed to switch and change the high speed side to the low speed side and the low speed side to the high speed side among the primary husking roll 3 and the secondary husking roll 4.

As described above, rice hull input to the hulling machine 1 receives a husking effect by the circumferential speed difference between the primary husking roll 3 and the secondary husking roll 4 and pressing force thereof. The primary husking roll 3 rotating at high speed has larger accumulative contact area with rice hull than that of the secondary husking roll 4 rotating at low speed, and thus abrades earlier, and as a result, the outer diameter of the primary husking roll 3 decreases. Accordingly, the circumferential speed difference between the primary husking roll 3 and the secondary husking roll 4 decreases, which causes a situation in which the husking ratio decreases and the increase rate of broken rice increases. With the above-described control by the hulling control unit, it is possible to automatically perform improvement of the quality state of hulled rice such as decrease of the husking ratio, increase of the increase rate of broken rice, and the like.

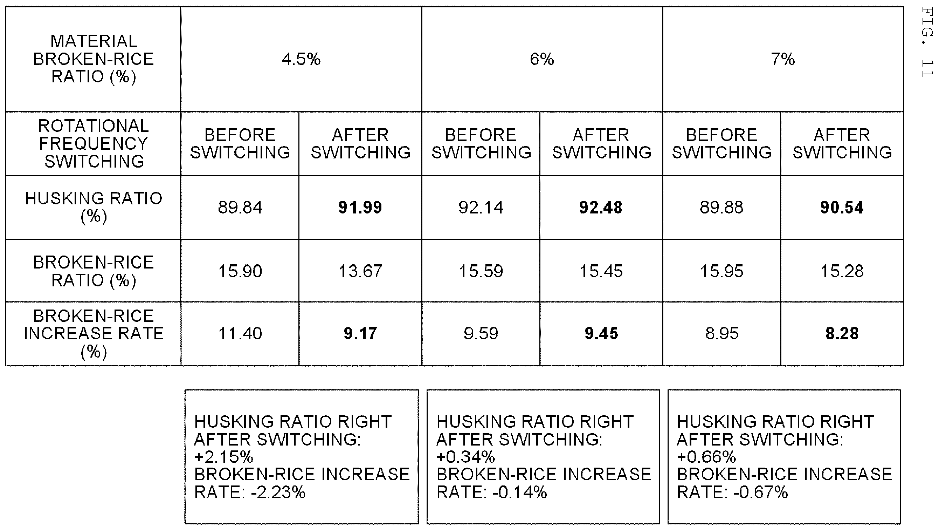

Figure 11 illustrates exemplary experiment results when the rotational speeds of the primary husking roll 3 and the secondary husking roll 4 is controlled by the hulling control unit, illustrating results of examination of influence of rotational-speed switching control in a predetermined time elapse on the husking ratio and the broken-rice increase rate before and after the switching when materials for which the broken-rice ratio is 4.5%, 6%, and 7%, respectively, are input to the hulling machine 1.

The experiment results indicate that, among the husking ratio and the broken-rice increase rate after the rotational-speed switching control, the husking ratio improved by 2.15% and the broken-rice increase rate decreased by 2.23% for the material with the broken-rice ratio of 4.5%. The husking ratio improved by 0.34% for the material with the broken-rice ratio of 6% and decreased the broken-rice increase rate by 0.14%. The husking ratio improved by 0.66% and the broken-rice increase rate decreased by 0.67% for the material with the broken-rice ratio of 7%, and these above-described results are favorable.

The timing of switching the rotational speeds of the primary husking roll 3 and the secondary husking roll 4 can be set by the setting input means of the hulling control unit described above, and predetermined threshold values can be input and set to the husking ratio and the broken-rice increase rate to automatically execute the rotational-speed switching control. With such a configuration, the hulling machine 1 can be constantly controlled in a favorable state so that the hulled-rice quality including the husking ratio can be continuously maintained in a most favorable state.

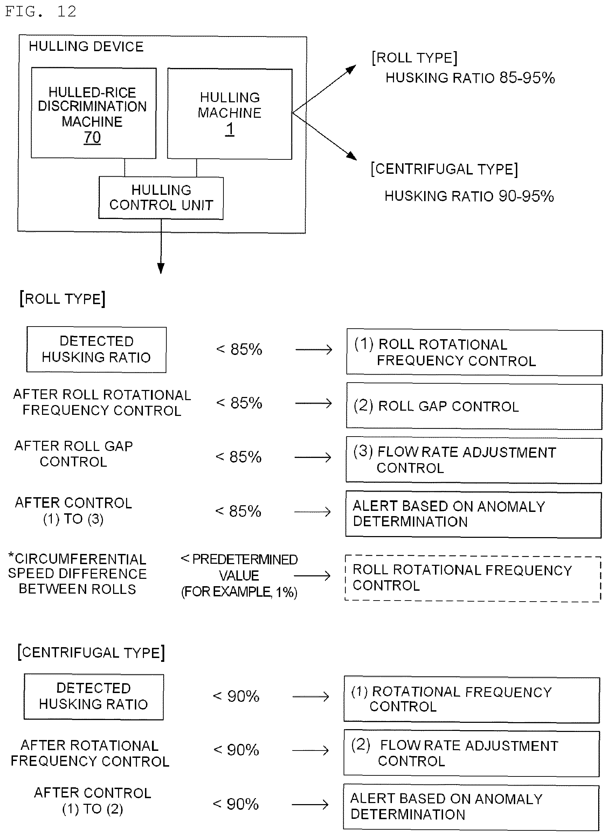

Figure 12 illustrates an example of a control aspect of the hulling control unit. Although an appropriate range of the husking ratio is substantially 85 to 95% for the roll-type hulling machine 1 as in the present embodiment, when the husking ratio is determined to be equal to or lower than 85% based on a result of detection by the optical examination unit 75, (1) such roll rotational frequency control is performed that switching of the rotational speeds of the primary husking roll 3 and the secondary husking roll 4 is executed to control the husking ratio to approach 85 to 95%.

When the above-described appropriate range of the husking ratio is not reached after elapse of a certain time since the roll rotational frequency control as described above in (1) is executed, (2) such roll gap control is performed that the above-described roll gap adjustment means is operated to control the husking ratio to approach 85 to 95%.

When the above-described appropriate range of the husking ratio is not reached after elapse of a certain time after the roll gap control as described above in (2) is performed, the flow rate of grain is potentially excessive, and thus (3) such flow rate adjustment control is performed that the vibration feeder capable of adjusting the flow rate of grain directly below the supply inlet 32 is controlled to decrease the flow rate of grain.

Note that when the appropriate husking-rate range of 85 to 95% is not reached through the above-described control (1) to (3), anomaly determination is performed, and control is performed to warn the administrator or operator of the device.

As illustrated with "*" in Figure 12, in addition to the above-described control (1) to (3), such control may be performed that switching of the rotational speeds of the primary husking roll 3 and the secondary husking roll 4 is executed as the roll rotational frequency control when the circumferential speed difference between the rolls is smaller than a predetermined value (for example, 1%). With addition of such a control configuration, it is possible to further excellently maintain the quality of hulled rice.

### (Other embodiments)

The embodiment of the hulling device of the present invention is described above but may be modified in various kinds of manners. For example, in the above-described embodiment, the full-color camera 751 including a light receiving element of each color and the image capturing camera 756 are provided as the camera means in the optical examination unit 75. However, the present invention is not necessarily limited to such a configuration, but a video captured by the image capturing camera 756 may be provided with image processing to extract each of the red color component, the green color component, and the blue color component, and accordingly, installation of the full-color camera 751 may be omitted.

In the above-described embodiment, the full-color camera 751 including a light receiving element of each color is provided as the camera means, but single-color light-receiving sensors corresponding to red, green, and blue, respectively, may be provided.

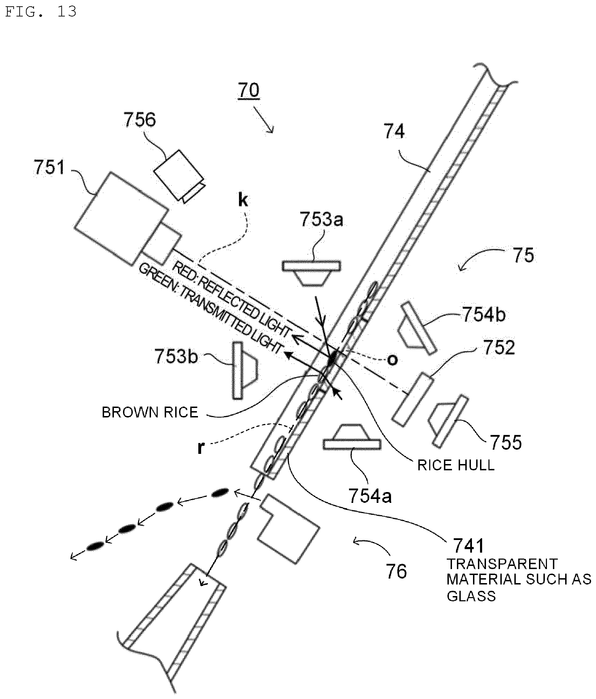

Figure 13 is a schematic side view illustrating another embodiment of the aspect of hulled-rice discrimination at the hulled-rice discrimination machine, in which a downflow gutter 15 is formed in an elongated shape and a transparent material 741 such as glass is provided at part of a bottom surface near the observation region o. With this configuration, air resistance is unlikely to occur to grain of hulled rice and the posture of grain is stable unlike a configuration in which hulled rice is discharged from the lower end of the downflow gutter 74 and flows downward in a free-fall (free-fly) state as in conventional cases, and thus the accuracy of hulled-rice discrimination can be improved. Note that a slit-shaped space may be provided in place of the above-described transparent material 741, and the downflow gutter 74 may be configured as a belt conveyer.

As illustrated in Figure 12, a centrifugal-type (impeller-type) husking machine may be applied in place of the roll-type hulling machine 1. Because the appropriate range of the husking ratio is substantially 90 to 95% for the centrifugal-type (impeller-type) husking machine, when the husking ratio is equal to or lower than 90% based on a result of sensing by the optical examination unit 75, (1) rotational frequency control is performed to control the rotational frequency of the centrifugal-type husking machine so that the husking ratio approaches the above-described appropriate range of 90 to 95%. When the above-described appropriate range of the husking ratio is not reached after elapse of a certain time since the rotational frequency control is performed, the flow rate of grain is potentially excessive, and thus (2) flow rate adjustment control is performed to decrease the flow rate of grain. When the appropriate range of the husking ratio is not reached through the control (1) and (2), anomaly determination is performed to warn the administrator or operator of the device.

### (Monitoring control system 200)

Although the control aspect of the hulling control unit in the hulling device as illustrated in the block diagram of Figure 12 is described in detail above in the embodiment, a plurality of hulling devices, selection devices configured to select hulled rice discharged from each hulling device, weighing machines, and the like may be connected to one another through a network, processing statuses at various devices may be collectively monitored, and each device may be control as necessary.

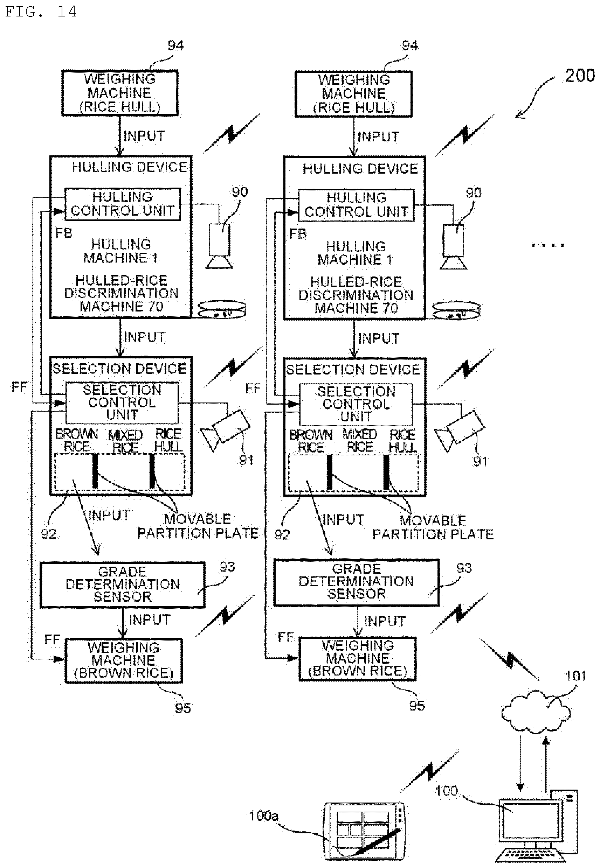

For example, Figure 14 illustrates a schematic diagram of a monitoring control system 200 in which a plurality of hulling devices, selection devices, weighing machines, and the like are connected to one another through a network and collectively managed by a monitoring control PC 100. Specifically, a weighing machine (rice hull) 94 includes a measurement device as well as a discrimination device for rice hull as a material. Rice hull before being input to a hulling device is measured, and in addition, quality data such as a weight per lot, a moisture amount, mixture ratios of immature rice, cracked rice, and broken rice, and the average length and thickness of rice hull can be collected.

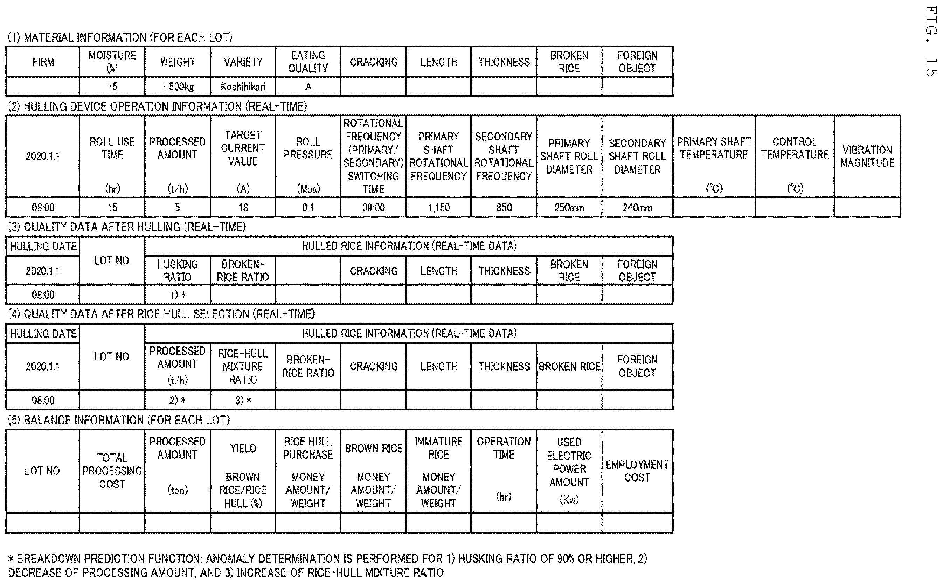

The quality data collected by the weighing machine (rice hull) 94 is transmitted to a network server 101 in a wired or wireless manner and can be displayed and monitored, together with information such as firm, variety, and eating quality, as material information (per lot) before inputting to a hulling device as illustrated in Table (1) of Figure 15 on the monitoring control PC 100.

Rice hull measured by the weighing machine (rice hull) 94 is input to a hulling device and, as in the above-described example, is subjected to hulling work by the hulling machine 1 and rice hull not provided with husking processing is selected by the ejector unit 76 of the hulled-rice discrimination machine 70. A husking image processing sensor 90 capable of capturing an image of hulled rice discharged from the hulling device and determining the husking ratio, the broken-rice ratio, and the like is provided at a discharge port of the hulling device. Each quality data of hulled rice, which is acquired by the husking image processing sensor 90, is transmitted to the network server 101 in a wired or wireless manner.

In addition, the hulling device is provided with a plurality of sensors configured to sense, for example, the current value and roll pressure of the hulling machine 1, the rotational frequencies and rotation difference ratio of the primary husking roll 3 and the secondary husking roll 4, the flow rate of rice hull, the temperatures of the roll shafts, and vibration at the hulling machine 1, and operational data such as the operation status of the hulling device is transmitted to the network server 101 in a wired or wireless manner. With this configuration, the operation status of the hulling device, including use time and processing amount of each roll, current values, roll pressures, a switching time of the rotational frequency of each roll, the rotational frequencies and temperatures of a primary shaft and a secondary shaft, the diameter of each roll, the magnitude of vibration can be displayed and monitored on the monitoring control PC 100 in real time as illustrated in Table (2) of Figure 15.

In addition, each quality data of hulled rice, which is acquired by the husking image processing sensor 90 described above, can be monitored on the monitoring control PC 100 through the network server 101, and the quality data after hulling, such as the husking ratio and the broken-rice ratio for each lot can be monitored in real time as illustrated in Table (3) of Figure 15. Note that the monitoring control PC 100 may perform operational control on the hulling device as necessary based on the above-described information such as the operational data of the hulling device and the quality data after hulling. For example, the husking ratio and the broken-rice ratio can be improved through appropriate remote control of the rotational speeds and pressing force of the primary husking roll 3 and the secondary husking roll 4.

Subsequently, hulled rice discharged from the hulling device is input to a selection device to obtain brown rice through hulled rice selection. The selection device includes a partition image processing sensor 91 that can capture panoramic images of brown rice, mixed rice of rice hull and brown rice, and rice hull flowing inside the selection device while being selected and move a movable partition plate to each boundary between kinds of rice. The selection device also includes a layer thickness sensor 92 that can measure the layer thickness of each of brown rice, mixed rice of rice hull and brown rice, and rice hull flowing inside the selection device. The layer thickness sensor 92 and the partition image processing sensor 91 are connected to a selection control unit. Operational data and quality data obtained by the selection control unit is fed back ("FB" in Figure 14) to the hulling control unit of the hulling device and fed forward ("FF" in Figure 14) to a weighing machine (brown rice) 95. Simultaneously, the operational data and the quality data are transmitted to the network server 101 in a wired or wireless manner.

The operational data and the quality data transmitted from the selection control unit to the network server 101 can be monitored on the monitoring control PC 100. For example, the processing amount and the rice-hull mixture ratio for each lot can be displayed in real time as illustrated in Table (4) of Figure 15.

In addition, for example, the rotational speeds and pressing force of the primary husking roll 3 and the secondary husking roll 4 in the hulling device based on the quality data fed back ("FB" in the illustration) from the selection control unit to the hulling control unit or the like can be automatically controlled to appropriate states, and the hulling device can be remotely controlled by an operation instruction at the monitoring control PC 100 as necessary.

Thereafter, brown rice selected by the selection device is transferred to a grade determination sensor 93 where its grade is determined, measured by the weighing machine (brown rice) 95, and collected. The grade determination sensor 93 and the weighing machine (brown rice) 95 are connected to the network in a wired or wireless manner, and various kinds of quality data are collected at the network server 101. With such a configuration of the monitoring control PC 100, a series of quality data of rice hull inputting, hulling, selection, grade determination, and brown rice collection, the operational data, yield management, and money amount balance of each device, and the like can be centrally managed and controlled by the monitoring control PC 100 through the network.

For example, as illustrated in Table (5) of Figure 15, data such as the purchase money amount of rice hull, the sale money amount of brown rice and immature rice, the operation time, the amount of used electric power, and employment cost in addition to the total processing amount and yield can be tallied by the monitoring control PC 100, and financial balance can be displayed for each lot. Since various kinds of information as described above can be checked at the monitoring control PC 100, it is possible to optimize various kinds of control by understanding setting, adjustment, and repair of each hulling device as well as the status of definitive balance.

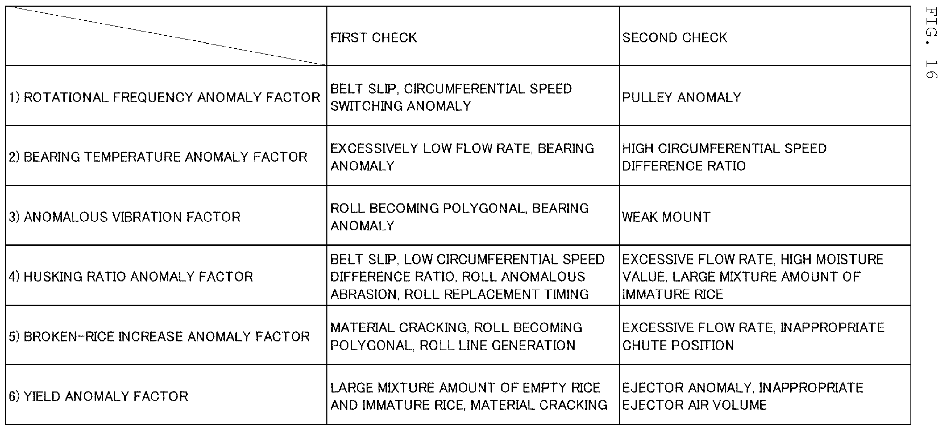

In the present example, breakdown of each device can be predicted based on information obtained from each device and each sensor. For example, in Table (3) of Figure 15, anomaly determination is performed when the processing amount shown by *2 in the table decreases although the husking ratio shown by *1 in the table is equal to or higher than 90%, or when the rice-hull mixture ratio shown by *3 in the table increases. Then, alert display is performed on the monitoring control PC 100 so that necessary check and handling can be performed. In this manner, breakdown can be predicted based on quality data and operational data collected by the network server 101 in the present example, and Figure 16 illustrates a configuration of breakdown factor check on anomaly sensing items such as anomaly of the rotational frequency, anomaly of bearing temperature, anomaly vibration, anomaly of the husking ratio, anomaly of the broken-rice ratio increase, and anomaly of the yield.

Examples of factors to be checked first (first check) as a rotational frequency anomaly factor of 1) in Figure 16 include occurrence of belt slip at a rotation belt of the primary husking roll 3 and the secondary husking roll 4, and occurrence of circumferential speed switching anomaly of the primary husking roll 3 and the secondary husking roll 4. When no such anomaly has occurred, examples of factors to be checked next (second check) include occurrence of anomaly at the pulleys.

Subsequently, as for a bearing temperature anomaly factor of 2) in Figure 16, the amount of rice hull input to the hulling machine 1 is too small or anomaly occurs to a bearing around the shaft of each husking roll in some cases, and these cases need to be checked first (first check). Examples of factors to be checked next (second check) include high circumferential speed difference ratio between the primary husking roll 3 and the secondary husking roll 4.

Examples of factors to be checked first (first check) as an anomaly vibration factor of 3) in Figure 16 include at least one of the primary husking roll 3 and the secondary husking roll 4 becoming polygonal, and occurrence of anomaly at a bearing around the shaft of each husking roll. When no such anomaly has occurred, examples of factors to be checked next (second check) include decrease of the strength of a mount to which the hulling machine 1 is fixed.

Examples of factors to be checked first (first check) as a husking ratio anomaly factor of 4) in Figure 16 include occurrence of belt slip at the rotation belt of the primary husking roll 3 and the secondary husking roll 4, low circumferential speed difference ratio between the primary husking roll 3 and the secondary husking roll 4, occurrence of anomalous abrasion of each husking roll, and check of the replacement timing of each husking roll. When no such anomaly has occurred, examples of factors to be checked next (second check) include an excessive amount of rice hull input to the hulling machine 1, a high moisture value of rice hull, and a large mixture amount of immature rice.

Examples of factors to be checked first (first check) as a broken-rice increase anomaly factor of 5) in Figure 16 include the status of material cracking, at least one of the primary husking roll 3 and the secondary husking roll becoming polygonal, and roll line generation at at least one of the primary husking roll 3 and the secondary husking roll 4. When no such anomaly has occurred, examples of factors to be checked next (second check) include an excessive amount of rice hull input to the hulling machine 1 and an inappropriate position of a chute through which grain is supplied between the primary husking roll 3 and the secondary husking roll 4.

Examples of factors to be checked first (first check) as a yield anomaly factor of 6) in Figure 16 include the status of material cracking and a large mixture amount of empty rice and immature rice. When no such anomaly has occurred, examples of factors to be checked next (second check) include anomaly at the ejector unit 76 and anomaly of the volume and speed of air discharged from the ejector unit 76.

The anomaly sensing handling processes of 1) to 6) exemplarily illustrated in Figure 16 are described above. Such anomaly sensing information may be displayed as an alert on the monitoring control PC 100 based on quality data and device operational data collected from each device and various separately provided sensors to the network server 101. For example, such display includes pop-up display such as "anomaly vibration sensed!". In addition, anomaly handling instruction display may be displayed on the monitoring control PC 100 in addition to alert display in accordance with the kind of occurred anomaly. For example, such display includes display of a specific check item, display of a part to be inspected and repaired, display of an operation instruction related to specific operation control. With such display, for example, the operation administrator of each device can perform necessary check, inspection, and repair as well as control operation of each device through a remote operation on the monitoring control PC 100.

The monitoring control PC 100 and the network server 101 may be disposed in a facility where each device including a hulling device is installed, and may be connected to the device including the hulling device in a wired or wireless manner. Connection between each device including the hulling device and the network server 101 and connection between the network server 101 and the monitoring control PC 100 may be established through a public communication line. With this configuration, operational data and quality data of each device including the hulling device can be monitored and controlled from a remote place. The fifth-generation mobile communication system (5G), with which large-volume communication can be performed at high speed may be used as the public communication line, and for example, monitoring and control can be performed by using a tablet-type communication terminal 100a as illustrated in Figure 14.

Although embodiments of the present invention are described above, the above-described embodiments of the invention are intended to facilitate understanding of the present invention and do not limit the present invention. The present invention may be changed and modified without departing from the scope of the present invention, and the present invention includes equivalents thereof. Moreover, constituent components written in the claims and the specification may be combined or omitted within a range in which at least part of the above-described problem can be solved or a range in which at least some of the above-described effects can be achieved.

### [Reference Signs List]

- 1: hulling machine
- 2: machine casing
- 3: primary husking roll
- 4: secondary husking roll
- 5: roll shaft
- 6: roll shaft
- 7: drive motor
- 8: drive motor
- 9: first large-diameter pulley
- 10: first small-diameter pulley
- 11: drive pulley
- 12: first idler pulley
- 13: endless belt
- 14: tension clutch pulley
- 15: belt clutch mechanism
- 16: support rod member
- 17: air cylinder
- 18: roll gap adjustment means
- 19: second small-diameter pulley
- 20: second large-diameter pulley
- 21: drive pulley
- 22: second idler pulley
- 23: third idler pulley
- 24: endless belt
- 25: tension clutch pulley
- 26: belt clutch mechanism
- 27: support rod member
- 28: air cylinder
- 29: air cylinder
- 30: rotary actuator
- 31: air pipe
- 32: supply inlet
- 33: air-pressure control device
- 34: mount
- 35: bearing
- 50: first sprocket
- 51: second sprocket
- 52: rotational shaft
- 53: relay double sprocket
- 54: rotational shaft
- 55: synchronization double sprocket
- 56: tension sprocket
- 57: tension sprocket
- 58: differential chain
- 59: differential chain
- 60: transmission chain
- 61: rod-type air cylinder
- 62: base
- 63: pivot pin
- 70: hulled-rice discrimination machine
- 71: hulled rice hopper
- 72: vibration device
- 73: vibration trough
- 74: downflow gutter
- 741: transparent material
- 75: optical examination unit
- 751: full-color camera (camera means)
- 752: background
- 753a, 753b: first illumination means
- 754a, 754b: second illumination means
- 755: third illumination means
- 756: image capturing camera (camera means)
- 76: ejector unit
- 77: brown-rice grain collection hopper
- 78: rice-hull collection hopper
- 79: brown-rice discharge unit
- 80: rice-hull discharge unit
- 81: grain lifting machine
- 90: husking image processing sensor
- 91: partition image processing sensor
- 92: layer thickness sensor
- 93: grade determination sensor
- 94: weighing machine (rice hull)
- 95: weighing machine (brown rice)
- 100: monitoring control PC
- 100a: tablet-type communication terminal
- 101: network server
- 200: monitoring control system

## Claims

1. A hulling device comprising:
a hulling machine configured to perform hulling through a husking roll;
a hulled-rice discrimination machine capable of examining hulled rice discharged from the hulling machine; and
a hulling control unit capable of controlling the hulling machine in accordance with a result of the examination of the hulled rice at the hulled-rice discrimination machine, wherein
the hulling control unit includes a rotational speed change means configured to change a rotational speed of the husking roll in the hulling machine in accordance with the result of the examination of the hulled rice.

2. The hulling device according to claim 1, wherein
the husking roll includes a primary husking roll configured to rotate at a predetermined rotational speed and a secondary husking roll configured to rotate at a rotational speed lower than the rotational speed of the primary husking roll, and
the rotational speed change means changes the rotational speed of the secondary husking roll so that the secondary husking roll rotates at a rotational speed higher than the rotational speed of the primary husking roll.

3. The hulling device according to claim 1 or 2, wherein
at least a husking ratio of the hulled rice is an examination item of the hulled rice, and
the hulling control unit causes the rotational speed change means to change the rotational speed of the husking roll when the husking ratio has become lower than a predetermined value.

4. The hulling device according to any one of claims 1 to 3, wherein
at least a broken-rice ratio of the hulled rice is an examination item of the hulled rice, and
the hulling control unit causes the rotational speed change means to change the rotational speed of the husking roll when an increase rate of the broken-rice ratio has become equal to or higher than a predetermined value.

5. The hulling device according to any one of claims 1 to 4, wherein
the hulled-rice discrimination machine includes
a downflow gutter through which the hulled rice is arrayed and flows down,
a light emission source configured to irradiate the hulled rice discharged from the downflow gutter with light, and
a camera means capable of receiving reflected light and transmitted light from the hulled rice irradiated with light from the light emission source, and
the light emission source includes
a first illumination means provided on the camera means side of the hulled rice and capable of irradiating the hulled rice with light of a red color component, and
a second illumination means provided on a far side of the hulled rice with respect to the camera means and capable of irradiating the hulled rice with light of a green color component.

6. The hulling device according to claim 5, wherein, on a result of light reception by the camera means,
the discharged hulled rice is discriminated as brown rice when received-light quantity of the light of the green color component is higher than a predetermined green-color-component threshold value, and
the discharged hulled rice is discriminated as rice hull when received-light quantity of the light of the green color component is lower than the predetermined green-color-component threshold value and received-light quantity of the light of the red color component is higher than a predetermined red-color-component threshold value.

7. The hulling device according to claim 5 or 6, wherein
the light emission source further includes a third illumination means provided at a position on an extended line connecting the camera means and the hulled rice and capable of irradiating a background of the hulled rice with light of a blue color component, and
it is discriminated that not the hulled rice but a foreign object is discharged from the downflow gutter when received-light quantity of the light of the blue color component is out of a predetermined range, on the result of light reception by the camera means.

8. The hulling device according to any one of claims 5 to 7, wherein the camera means is capable of capturing a video of the hulled rice in addition to light reception of the reflected light and the transmitted light.

9. The hulling device according to any one of claims 5 to 8, wherein the downflow gutter is extended to at least an observation region of the camera means in which the hulled rice is irradiated with light and can transmit light from the light emission source.

10. A hulling control system comprising:
a hulling device including a hulling device configured to perform hulling through a husking roll, a hulled-rice determination means capable of determining quality of hulled rice discharged from the hulling device, and a hulling control unit capable of controlling the hulling device in accordance with a result of the determination of the hulled rice at the hulled-rice determination means; and
a monitoring device connected to the hulling device in a wired or wireless manner and capable of receiving, outputting, and displaying the result of the determination of the hulled rice, wherein
a rotational speed of the husking roll in the hulling device can be changed in accordance with the result of the determination of the hulled rice output and displayed on the monitoring device.

11. The hulling control system according to claim 10, wherein
the hulling device includes an anomaly sensing means capable of sensing anomaly in the hulling device, and
the monitoring device includes an anomaly determination means capable of determining a plurality of kinds of anomaly based on sensing information from the anomaly sensing means, and an anomaly display means capable of outputting and displaying a result of the determination by the anomaly determination means.

12. The hulling control system according to claim 11, wherein the monitoring device includes an anomaly handling instruction display means capable of outputting and displaying a check content in accordance with priority in response to the result of the determination by the anomaly determination means.
